## Europäisches Patentamt
## European Patent Office
## Office européen des brevets

(19)

(11) Veröffentlichungsnummer: **0 175 075**
**B1**

(12) **EUROPÄISCHE PATENTSCHRIFT**

(45) Veröffentlichungstag der Patentschrift:
**05.10.88**

(51) Int. Cl.⁴: **H 02 K 1/18, H 02 K 15/02**

(21) Anmeldenummer: **85108272.7**

(22) Anmeldetag: **04.07.85**

(54) **Elektrische Maschine.**

(30) Priorität: **08.08.84 CH 3808/84**

(43) Veröffentlichungstag der Anmeldung:
**26.03.86 Patentblatt 86/13**

(45) Bekanntmachung des Hinweises auf die Patenterteilung:
**05.10.88 Patentblatt 88/40**

(84) Benannte Vertragsstaaten:
**AT BE CH DE FR GB IT LI NL SE**

(56) Entgegenhaltungen:
**CH - A - 342 633**
**DE - A - 1 463 943**
**DE - A - 1 928 759**
**DE - B - 1 078 680**
**GB - A - 1 430 756**

(73) Patentinhaber: **BBC Brown Boveri AG, Haselstrasse,
CH-5401 Baden (CH)**

(72) Erfinder: **Brem, Ernst, Sägestrasse 21,
CH-8952 Schlieren (CH)**

EP 0 175 075 B1

## Beschreibung

Die Erfindung bezieht sich auf eine elektrische Maschine gemäss dem Gattungsbegriff des Anspruchs 1.

Die Befestigung des Statorblechpakets im Maschinengehäuse bzw. im Statorkorsett ist so zu gestalten, dass sie allen während des Betriebes, namentlich im Kurzschlussfall auftretenden radialen und tangentialen Kräften gewachsen ist, ohne dass aufwendige Bearbeitungs- und/oder Montagetechniken eingesetzt werden müssen.

Aus der DE-B2 2 042 561 ist ein Turbogenerator mit einem Blechpaket bekannt, wobei das Blechpaket auf seiner Aussenseite mittels in seiner Längsrichtung sich erstreckenden schwalbenschwanzförmigen Keilen in einem Gehäuse aufgehängt ist, wobei die schwalbenschwanzförmigen Keile über Schraubenbolzen mit einem parallel zu ihnen sich erstreckenden, am Gehäuse fest angeordneten Keilträger verbunden sind.

Die Keilträger greifen teilweise in Ausnehmungen an der Aussenseite des Statorblechpakets mit spielfreier Anlage ein und sind an dem in das Innere des Statorblechpakets eingreifendem Teil verjüngt ausgebildet. Die Verjüngung der Keilträger ist dabei kreisbogenförmig ausgebildet. Die Schraubenbolzen werden mittels auf den Keilträgern abgestützten Federmitteln unter konstantem Zug gehalten. Die Keilträger sind fest mit einem innerhalb des Gehäuses angeordneten Statorkorsett verbunden.

Bei der Herstellung dieser elektrischen Maschine wird so vorgegangen, dass zuerst das Statorblechpaket zusammengestellt und mittels an seinen Stirnseiten angeordneten Pressplatten in axialer Richtung zusammengepresst wird, darauf die Keile in auf der Aussenseite des Statorblechpakets vorgesehene Nuten eingeführt und mit an auf der Aussenfläche des Statorblechpaketes vorgesehenen Anlageflächen anliegenden Keilträgern mittels der Schraubenbolzen verspannt werden, danach das derart durch die Keile, Keilträger und Pressplatten verspannte Statorblechpaket in das Statorkorsett eingeführt und nach Auszentrierung gegenüber dem Statorkorsett die feste Verbindung zwischen den Keilträgern und dem Statorkorsett hergestellt wird.

Die bekannte Ausbildung und Anordnung der Keilträger sichert eine spielfreie Auflage zwischen Gehäuse und Statorblechpaket, welche geeignet ist, Kräfte in radialer und Umfangsrichtung aufzunehmen. Gleichzeitig werden die Keile und die ihnen zugeordneten Schraubenbolzen vollständig von Umfangskräften entlastet. Sie lassen sich zudem jederzeit nachspannen.

Bei der DE-B2 2 042 561 wird das Blechpaket als Ganzes ausserhalb des Gehäuses fertiggestellt. Nach Einführen der Keile und Verspannen der Keilträger mit dem Statorblechpaket wird das axial verspannte Statorblechpaket in das Statorkorsett eingebracht und mit diesem fest verbunden. Erst danach wird das Statorkorsett samt dem Blechpaket in das Gehäuse eingebaut.

Bei elektrischen Maschinen, bei denen das Blechpaket direkt in das Gehäuse eingeblecht wird, lässt sich die oben beschriebene Vorgehensweise praktisch nicht anwenden. Der Kraftschluss zwischen Gehäuse und Blechpaket darf erst nach dem Pressen und dem Verfestigungsprozess des Blechpaketes hergestellt werden, da sich die Bleche sonst am Blechpaketrücken nicht mehr verschieben könnten. Darüber hinaus müssten alle Befestigungsstellen über die gesamte Eisenlänge und über den gesamten Umfang von aussen zugänglich sein, was wiederum eine sehr grosse Zahl von verschliessbaren Öffnungen im druckfesten Gehäusemantel bedingt.

Gegenstand der DE-B-1 078 680 ist eine federnde Aufhängung eines Blechpaketes für elektrische Maschinen, bei der zur Erzielung einer Federung und Dämpfung Zwischenschichten zwischen Nutkeil und Blechpaket und/oder zwischen Nutkeil und Keilträger vorgesehen sind. Nutkeile und Keilträger sind dabei von der Blechpaketseite her vor dem Schichten des Blechpakets verschraubt, so dass das Schichten nur von den Stirnseiten her möglich ist. Ein Nachspannen der Keile ist nicht möglich.

Ausgehend vom Stand der Technik liegt der Erfindung die Aufgabe zugrunde, eine elektrische Maschine der eingangs genannten Gattung zu schaffen, bei welcher das Statorblechpaket unmittelbar in das Maschinengehäuse eingeblecht werden kann, wobei die Einzelbleche im wesentlichen nur radial eingeschoben werden müssen, und die Herstellung des Kraftschlusses zwischen Blechpaket und Gehäuse nach dem Pressen und Verfestigen des Blechpaketes erfolgen kann, ohne dass eigens dafür vorgesehene Montageöffnungen im Gehäusemantel vorgesehen werden müssen.

Die Lösung dieser Aufgabe erfolgt durch die im Patentanspruch 1 gekennzeichnete Erfindung.

Die Erfindung ermöglicht eine spielfreie und kraftschlüssige Verbindung des Blechpakets mit dem Gehäuse, die sich nach dem Pressen und Verfestigungsprozess ausschliesslich von den Stirnseiten des Gehäuses her bewerkstelligen lässt. Dies ist insbesondere bei wasserstoffgekühlten elektrischen Maschinen von grossem Vorteil, wo jede Öffnung im Gehäusemantel $H_2$-dicht verschlossen werden müsste. Im fertig montierten und verspannten Zustand weist die Erfindung alle positiven Eigenschaften der klassischen Schwalbenschwanzverkeilung (z.B. nach der DE-B2 042 561) auf, was die Qualität der Verkeilung in Radial- und in Umfangsrichtung anbelangt. Je nach Art des Spannmittels erlaubt sie sogar ein Nachspannen der Verkeilung.

Die radiale Abstützung des Blechpakets gegenüber dem Gehäuse erfolgt im wesentlichen unmittelbar über den Mittelteil des Keiles, diejenige in Umfangsrichtung über die Spannmittel. Ein Nachgeben der Verspannung in Umfangsrichtung wirkt sich somit nicht unmittelbar auf die Güte der Abstützung in radialer Richtung aus.

Die Ausbildung der Keile ermöglicht eine wesentliche Vereinfachung des Einblechens: jede Blechlage besteht in der Regel aus mehreren Segmentblechen, die sich in Umfangsrichtung über zwei oder mehr Keilträger erstrecken. Während bei Segmentblechen mit klassischen schwalbenschwanzförmigen Ausnehmungen und entsprechend schwalbenschwanzförmigen Keilen jedes einzelne Segmentblech von der Stirnseite her über die Keile bis zum Einbauort im Gehäuseinnern geschoben werden muss, können bei der Erfindung die Segmentbleche bis zur aktuellen Blechlage abgesenkt und dort in Radialrichtung eingeschoben werden.

Die Verspannmittel sind nach einer ersten Ausführungsform als Doppelschrägkeile ausgebildet, die ein vergleichsweise einfaches mechanisches Spannen, z.B. durch Hammerschläge erlauben. Werden gemäss Anspruch 3 zwischen den Keilflächen vorzugsweise als Wellfedern ausgebildete Federmittel angeordnet, lassen sich eventuelle Setzerscheinungen im Betrieb vermeiden.

Eine andere Ausbildung der Spannmittel (Anspruch 4) mit bleibend deformierten Hohlkörpern, z.B. dickwandigen Metallrohren, ermöglicht die gleichzeitige Verspannung aller Keile einer Nut und gegebenenfalls gar das nachträgliche Nachspannen der Keile.

Eine weitere alternative Ausbildung der Spannmittel nach Anspruch 5 macht von einer Technik Gebrauch, wie sie sich im Zusammenhang mit der Verkeilung von Ständerwicklungen seit Jahren bewährt hat.

Nach Anspruch 6 sind die Keilmittelteile mit den Keilträgern verschraubt, wobei zur Entlastung der Schraubenverbindung entweder separate Scherbolzen oder Scherbüchsen, durch welche die Schraubbolzen geführt sind, Verwendung finden.

Üblicherweise weist das Maschinengehäuse nach innengerichtete ringförmige Verstärkungsrippen auf, an denen die axial verlaufenden Keilträger befestigt – in der Regel verschweisst – sind. Gemäss Anspruch 7 sind erfindungsgemäss die Keile an dem freitragenden Abschnitt des Keilträgers zwischen zwei benachbarten Verstärkungsrippen befestigt. Dies bietet den Vorteil, die Elastizität der Abstützung zwischen Blechpaket und Gehäuse innerhalb gewisser Grenzen zu variieren, z.B. durch Wahl der Befestigungsstellen, Querschnitt und Materialeigenschaften des Keilträgermaterials. Der Keilträger wirkt dann als Längsfeder.

Die Erfindung wird nachstehend anhand von Ausführungsbeispielen und der Zeichnung näher erläutert:

In der Zeichnung zeigt:

Fig. 1 einen achsnormalen Schnitt durch den Stator einer elektrischen Maschine,

Fig. 2 das Detail A aus Fig. 1 in vergrössertem Massstab,

Fig. 3 einen Längsschnitt durch einen Doppelschrägkeil als Spannmittel,

Fig. 4 eine Abwandlung des Details B aus Fig. 2 mit einem hydraulisch bleibend verformbaren Rohr,

Fig. 5 eine weitere Abwandlung des Details B aus Fig. 2 mit einem kunstharzgefüllten Schlauch als Spannmittel,

Fig. 6 einen Längsschnitt durch den Stator gemäss Fig. 1 längs deren Linie DD.

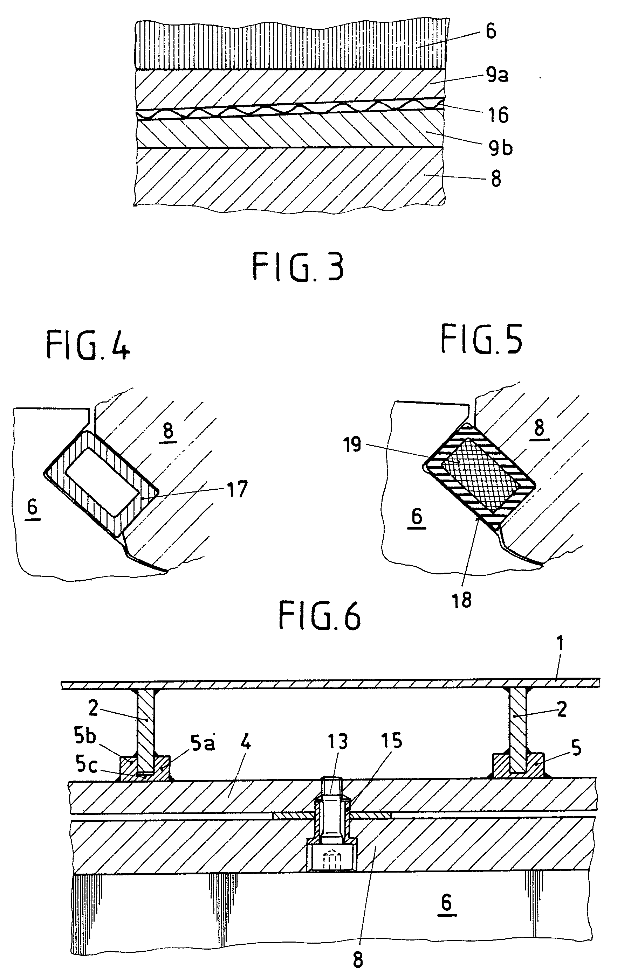

Ein Statorgehäusemantel 1 ist mit ringförmigen, nach innen gerichteten Verstärkungsrippen 2 versehen, die Durchbrüche zur Kühlgasführung aufweisen. Mit den Verstärkungsrippen ist ein sich über die gesamte Eisenlänge erstreckender Keilträger 4 verschweisst, wobei U-förmige oder flache Schweisslaschen 5 die genaue Ausrichtung der Keilträger 4 im Gehäuse ermöglichen (vgl. auch Fig. 6). Ein aus Blechsegmenten 6a, 6b und 6c aufgebautes Blechpaket ist mit der Bezugsziffer 6 gekennzeichnet. Die Blechsegmente erstrecken sich in Umfangsrichtung im dargestellten Fall über drei Keilträger 4. Das Blechpaket 6 weist am Aussenumfang gleichmässig verteilte Nuten 7 auf. Der blechrückenseitige Abschnitt der Nuten 7 weist ein schwalbenschwanzförmiges Profil auf. Gegen den Nutengrund hin verjüngt sich die Nut. Ein mehrteiliger Nutkeil besteht aus einem Keilmittelteil 8 mit halsförmigem Querschnitt und paarig angeordneten Spannmitteln in Form zweier Doppelschrägkeile 9, mit den Keilhälften 9a und 9b.

Der Keilmittelteil 8 weist zwei symmetrisch zu seiner Längsachse verlaufende Dreiecknuten auf, deren Seitenwände mit 10, 11 bezeichnet sind und senkrecht aufeinander stehen. Die eine Nutseitenwand 11 verläuft planparallel zur Seitenwand 12 des schwalbenschwanzförmigen Abschnitts der Nut 7 und bildet die eine Anlagefläche des Doppelschrägkeils 9. Die Seitenwand 12 bildet die andere Anlagefläche des Doppelschrägkeiles 9. Die andere Seitenwand 10 der Dreiecksnut verläuft annähernd planparallel zu dem sich nach innen verjüngenden Abschnitt der Nut 7. Der so gebildete sich über die gesamte axiale Länge des Keils erstreckende Hohlraum bzw. Kanal wird praktisch zur Gänze vom Doppelschrägkeil 9 ausgefüllt.

Der Keilmittelteil 8 ist am Keilträger mittels einem Schraubbolzen 13 befestigt. Entsprechend dicke Zwischenlagen 14 erlauben eine exakte Ausrichtung der Keile gegenüber dem Keilträger 4. Zur Aufnahme von Kräften in Umfangsrichtung kann eine Scherbüchse 15 vorgesehen sein (vgl. Fig. 6), durch welche der Schraubbolzen 13 geführt ist. Selbstverständlich können auch separate Scherbolzen an die Stelle der Scherbüchse treten.

Der Nutengrund der Nut 7 kann bogenförmig oder eben sein, das blechpaketseitige Ende des Keilmittelteils 8 weist ein dem Nutgrund angepasstes Profil auf. Der radiale Kraftfluss vom Blechpaket zum Gehäuse erfolgt im wesentlichen über den Keilmittelteil, Zwischenlagen 14, Keilträger 4 zu den Verstärkungsrippen 2.

Wie aus Fig. 6 hervorgeht ist die axiale Länge der Auflagefläche des Keiles am Keilträger 4 um ein Vielfaches kleiner als die axiale Distanz zwischen zwei benachbarten Verstärkungsrippen 2. Durch Wahl des Befestigungspunktes des Keils 8 am Keilträger 4 und/oder durch Materialwahl und Querschnitt des Keilträgers 4 lässt sich die radiale Elastizität der Abstützung des Blechpakets 6 gegenüber dem Gehäuse 1 einstellen, da der Keilträger als Längsfeder wirkt.

Aus Fig. 6 ist ferner die Funktion der U-förmigen Schweisslaschen ersichtlich. Die beiden Schenkel 5a, 5b umfassen das innen liegende Ende der Verstärkungsrippen. Der Verbindungssteg 5c kann vergleichsweise dünn gehalten werden. Beim Einschweissen der Keilträger 4 in das (leere) Maschinengehäuse tauchen die Enden der Verstärkungsrippen 2 mehr oder weniger tief in die Schweisslaschen ein. Nach dem Ausrichten der Keilträger werden die Schweisslaschen einerseits mit den Verstärkungsrippen 2 und andererseits mit den Keilträgern verschweisst.

Die Doppelschrägkeile 9a, 9b übernehmen zusammen mit den Keilmittelteilen 8 die Abstützung des Blechpakets in Umfangsrichtung. Eventuelle auftretende Setzerscheinungen nach dem Verkeilen lassen sich durch Zwischenlegen von Federmitteln, z.B. einer Wellfeder 16, zwischen die beiden Keilhälften a priori vermeiden (Fig. 3).

Anstelle von Doppelschrägkeilen können auch andere Spannmittel verwendet werden. So zeigt Fig. 4 ein starkwandiges Metallrohr 17 mit Rechteckquerschnitt, das in den Hohlraum zwischen Keilmittelteil 8 und Blechpaket 6 eingeschoben und durch hydraulische Mittel aufgeweitet ist. Das Rohrmaterial ist dabei so gewählt, dass es sich bei Druckbeaufschlagung plastisch verformt.

Eine weitere Ausführungsform eines Spannmittels zeigt Fig. 5. Hier ist in den besagten Hohlraum ein verformbarer Schlauch 18 eingeführt, der mit einem härtbaren Kunstharz gefüllt ist, wobei das Kunstharz unter Druck ausgehärtet wurde.

Der Aufbau des Stators vollzieht sich in folgenden Schritten:

In das (leere) Maschinengehäuse werden unter Verwendung von Schweisslehren die Keilträger 4 angeschweisst.

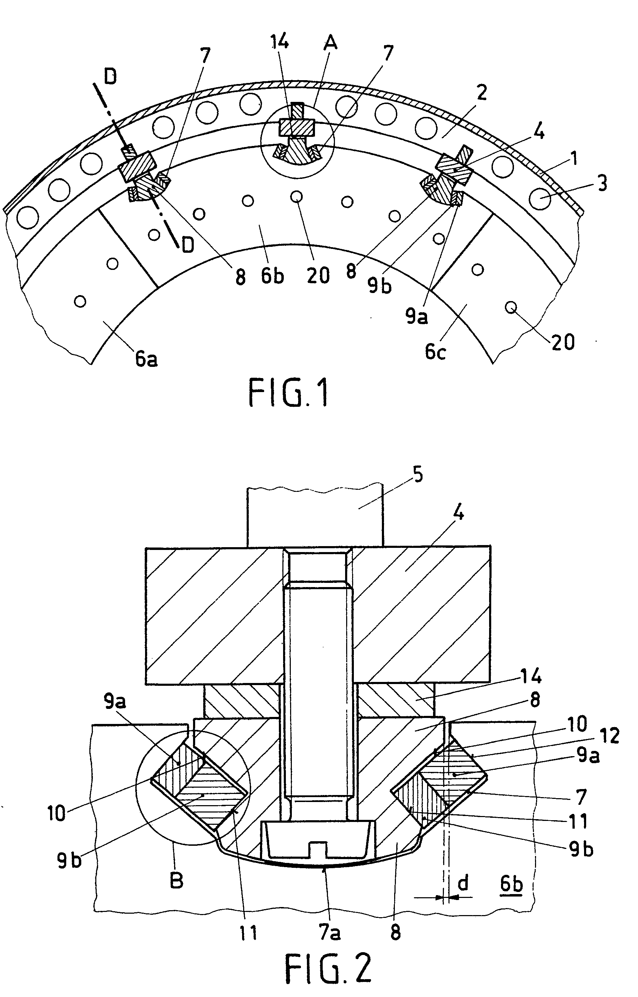

Die Keilmittelteile 8 werden an den dafür vorgesehenen Stellen – gegebenenfalls unter Zwischenschaltung der Zwischenlagen 14 und separater Scherbolzen – angeschraubt. Das vertikal angeordnete Maschinengehäuse wird eingeblecht, wobei die Bleche im wesentlichen radial eingeschoben werden können, da auch der Keilmittelteil 8 gegen den Nutengrund zu schmaler wird und das Spiel d (Fig. 2) vorgesehen ist.

Nach dem Einblechen wird das Blechpaket 6 mit Statorpressplatten und Pressankern mittels Zugbolzen 20 in Axialrichtung verspannt. Anschliessend werden die Doppelschrägkeile 9 eingeführt, bis zum vorgesehenen Einbauort geschoben und durch Hammerschläge auf die auflaufende Keilhälfte verkeilt.

**Patentansprüche**

1. Elektrische Maschine, insbesondere Turbogenerator, mit einem Blechpaket, das auf seiner Aussenseite über den gesamten Umfang verteilte, axial verlaufende Nuten (7) aufweist und dort mittels in seiner Längsrichtung sich erstreckenden Keilen in einem Gehäuse (1) aufgehängt ist, wobei die Keile mit parallel zu ihnen sich erstrekkenden, am Gehäuse fest angeordneten Keilträgern (4) verbunden sind, dadurch gekennzeichnet, dass der Keil mehrteilig ausgebildet ist und einen zentralen Mittelteil (8), der mit dem Keilträger (4) lösbar verbunden ist, und vollständig innerhalb der genannten Nuten (7) verlaufende seitliche, axial betätigbare Spannmittel (9) aufweist, dass die Nuten (7) im Blechpaket zumindest im aussenumfangsnahen Bereich schwalbenschwanzförmig ausgebildet sind und sich radial nach innen hin wieder verjüngen, dass der Mittelteil (8) des Keiles an dem dem Keilträger (4) abgewandten Ende parallel zu den Nutwänden des schwalbenschwanzförmigen Abschnitts verlaufende und von diesen Nutwänden distanzierte Anlagefläche (11) aufweist, die Spannmittel (9) axial in die Hohlräume zwischen diesen Anlageflächen und den besagten Nutwänden einschiebbar sind, dass das radial nach innen gerichtete Ende des Mittelteils (8) des Keils im Nutgrund abgestützt und dass der Mittelteil des Keiles in Umfangsrichtung gesehen eine Gesamtbreite ($B_K$) hat, die kleiner ist als die Breite der Nut (7) am Aussenumfang des Blechpakets (6).

2. Elektrische Maschine nach Anspruch 1, dadurch gekennzeichnet, dass die Spannmittel als axial in die besagten Hohlräume einschiebbare und dort verkeilbare, paarig angeordnete Doppelschrägkeile (9) ausgebildet sind, wobei in Axialrichtung gesehen jedem Keil mindestens ein Keilpaar zugeordnet ist.

3. Elektrische Maschine nach Anspruch 2, dadurch gekennzeichnet, dass zwischen den Auflageflächen der Doppelschrägkeilteile (9a, 9b) Federmittel, vorzugsweise ein Wellfeder (16), angeordnet ist.

4. Elektrische Maschine nach Anspruch 1, dadurch gekennzeichnet, dass die Spannmittel als axial in die besagten Hohlräume einschiebbare, metallische, hydraulisch bleibend deformierbare Hohlkörper (17) ausgebildet sind.

5. Elektrische Maschine nach Anspruch 1, dadurch gekennzeichnet, dass die Spannmittel als axial in die Hohlräume einschiebbare mit einem härtbaren Kunstharz gefüllte und unter Druck ausgehärtete Schläuche (18) ausgebildet sind.

6. Elektrische Maschine nach einem der Ansprüche 1 bis 5, dadurch gekennzeichnet, dass die Keilmittelteile (8) mit dem Keilträger (4) gegebenenfalls unter Verwendung von Scherbüchsen (15) oder getrennten Scherbolzen verschraubt sind.

7. Elektrische Maschine nach einem der Ansprüche 1 bis 6 mit einem Gehäuse mit innen liegenden ringförmigen Verstärkungsrippen, dadurch gekennzeichnet, dass die Keilträger (4) mit den Verstärkungsrippen (2) verschweisst sind und die Keilmittelteile (8) zwischen zwei benachbarten Verstärkungsrippen mit dem Keilträger verbunden sind.

**Revendications**

1. Machine électrique, en particulier turbogénérateur, avec un paquet de tôles qui présente à sa surface extérieure des rainures axiales (7) réparties sur tout son pourtour et qui y est suspendu dans une carcasse (1) au moyen de clavettes s'étendant suivant sa direction longitudinale, dans laquelle les calvettes sont reliées à des porte-clavettes (4) fixés à la carcasse et s'étendant parallèlement aux clavettes, caractérisé en ce que la clavette est réalisée en plusieurs parties et présente une partie médiane (8) centrale, qui est reliée de façon amovible au porte-clavettes (4), et des moyens de calage (9) latéraux, actionnables axialement, placés entièrement à l'intérieur des rainures (7) précitées, en ce que les rainures (7) dans le paquet de tôles sont profilées en queue d'aronde au moins dans la region proche de la surface extérieure, et qu'elles se rétrécissent à nouveau radialement vers l'intérieur, en ce que la partie médiane (8) de la clavette présente, à son extrémité opposée au porte-clavettes (4), des faces d'appui parallèles aux parois de la rainure de la découpe en queue d'aronde et distantes de ces parois de la rainure, en ce que les moyens de calage (9) peuvent être introduits axialement dans les espaces vides entre ces faces d'appui et les parois de rainure précitées, en ce que l'extrémité dirigée radialement vers l'intérieur de la partie médiane (8) de la clavette prend appui au fond de la rainure et en ce que la partie médiane (8) de la clavette, vue en direction tangentielle, présente une largeur totale ($B_K$) qui est plus petite que la largeur de la rainure (7) à la périphérie du paquet de tôles (6).

2. Machine électrique suivant la revendication 1, caractérisée en ce que les moyens de calage sont réalisés sous la forme de clavettes obliques doubles (9) disposées par paires, pouvent être introduites axialement dans les espaces vides précités et clées en place, au moins une paire de clavettes étant, vue en direction axiale, associée à chaque clavette.

3. Machine électrique suivant la revendication 2, caractérisée en ce qu'entre les faces d'appui des clavettes obliques doubles (9a, 9b) est interposé un moyen élastique, de préférence un ressort ondulé (16).

4. Machine électrique suivant la revendication 1, caractérisée en ce que les moyens de calage sont réalisés sous la forme de corps creux (17) métalliques, déformables de manière permanente par voie hydraulique, pouvant être introduits axialement dans les espaces vides précités.

5. Machine électrique suivant la revendication 1, caractérisée en ce que les moyens de calage sont réalisés sous la forme de tuyaux flexibles (18) remplis d'une résine synthétique durcissable et durcis sous pression, pouvant être introduits axialement dans les espaces vides.

6. Machine électrique suivant l'une des revendications 1 à 5, caractérisée en ce que les parties médianes (8) des clavettes sont vissées au porte-clavettes (4) le cas échéant en utilisant des buselures cisaillées (15) ou des boulons cisaillés séparés.

7. Machine électrique suivant l'une des revendications 1 à 6, avec une carcasse comportant des nervures de renforcement annulaires intérieurement disposées, caractérisée en ce que les porte-clavettes (4) sont soudés aux nervures de renforcement (2) et en ce que les parties médianes (8) des clavettes sont attachées au porte-clavettes entre deux nervures de renforcement voisines.

## Claims

1. Electrical machine, particularly turbo generator, having a laminated core which exhibits on its outside axially extending grooves (7) which are distributed over the entire circumference and is there suspended in a casing (1) by means of wedges extending in its longitudinal direction, in which arrangement the wedges are connected to wedge carriers (4) which are permanently arranged at the housing and extend in parallel with the wedges, characterized in that the wedge is constucted of several parts and exhibits a central centre part (8), which is detachably connected to the wedge carrier (4), and lateral axially actuatable clamping means (9) which extend completely inside the said grooves (7), in that the grooves (7) in the laminated core are constructed to be dovetailshaped at least in the area close to the outside circumference and taper again radially inwardly, in that the centre part (8) of the wedge exhibits at the end facing away from the wedge carrier (4) support faces (11) which extend parallel to the groove walls of the dovetail-shaped section and are spaced apart from these groove walls, the clamping means (9) can be axially inserted into the hollow spaces between these support faces and the said groove walls, that the radially inwardly pointing end of the centre part (8) of the wedge is supported at the groove bottom and in that the centre part of the wege, as seen in the circumferential direction has a total width ($B_K$) which is less than the width of the groove (7) at the outside circumference of the laminated core (6).

2. Electrical machine according do Claim 1, characterized in that the clamping means are constructed as double-slope wedges (9) which are arranged in pairs which can be axially inserted into the said hollow spaces and can be wedged there, at least one wedge pair being allocated to each wedge seen in the axial direction.

3. Electrical machine according to Claim 2, characterized in that spring means, preferably a corrugated spring (16), is arranged between the support face of the double-slope wedge parts (9a or 9b).

4. Electrical machine according to Claim 1, characterized in that the clamping means are constructed as metallic, hydraulically permanently deformable hollow bodies (17) which can be axially inserted into the said hollow spaces.

5. Electrical machine according to Claim 1, characterized in that the clamping means are constructed as tubes (18) which are filled with a curable synthetic resin and are cured under pressure and can be axially inserted into the hollow spaces.

6. Electrical machine according to one of Claims 1 to 5, characterized in that the wedge centre parts (8) are screwed to the wedge carrier (4), if necessary by using shear bushes (15) or separate shear bolts.

7. Electrical machine according to one of Claims 1 to 6, having a casing with inwardly located annular reinforcement ribs, characterized in that the wedge carriers (4) are welded to the reinforcement ribs (2) and the wedge centre parts (8) are connected to the wedge carrier between two adjacent reinforcement ribs.

FIG.1

FIG.2

FIG. 3

FIG. 4

FIG. 5

FIG. 6